# EUROPÄISCHE PATENTSCHRIFT

(11) **EP 0 699 856 B1**
(45) Veröffentlichungstag und Bekanntmachung des Hinweises auf die Patenterteilung: **08.07.1998**
(21) Anmeldenummer: 95113274.5
(22) Anmeldetag: 24.08.1995
(51) Int. Cl.: F16K 11/078

(54) **Einhebelmischventil**
Single lever mixing valve
Mitigeur monocommande

(30) Priorität: 03.09.1994 DE 4431435
(43) Veröffentlichungstag der Anmeldung: 06.03.1996
(73) Patentinhaber: FRIEDRICH GROHE AKTIENGESELLSCHAFT, D-58675 Hemer (DE)
(72) Erfinder: Rüth, Andreas, D-58675 Hemer (DE); Schneider, Anton, D-44137 Dortmund (DE)

(56) Entgegenhaltungen:
- WO-A-94/21948
- DE-A- 3 645 002
- DE-A- 3 719 410

## Beschreibung

Die Erfindung betrifft ein Einhebelmischventil mit den im Oberbegriff des Anspruchs 1 angegebenen Merkmalen. Derartige Einhebelmischventile sind aus der DE-A-37 19 410 bekannt. Weitere Einhebelmischventile sind in verschiedenen Ausgestaltungen aus den Druckschriften DE 37 16 305 A1, DE 32 44 121 A1, DE 30 18 771 A1 bekannt. Bei diesen bekannten Mischventilen befindet sich der Handhebel in der Schließstellung in der Regel aus geschmacklichen Gründen parallel zum Auslaufarm des Armaturenkörpers, wobei das Mischventil in dieser Hebelstellung etwa eine mittlere Mischposition einnimmt. Beim Öffnen des Mischventils wird nun meistens der Handhebel in dieser Grundposition angehoben, so daß Warmwasser in dem Mischventil erzeugt wird, obwohl vielfach nur Kaltwasser gewünscht bzw. benötigt wird. Die unnötige Abgabe von Warmwasser führt jedoch zu nicht unerheblichen Energieverlusten.
Zur Vermeidung dieser Energieverluste ist in der Druckschrift DE 37 19 410 A1 ein Einhebelmischventil vorgeschlagen, bei dem mit einer hydraulischen Einrichtung nach jeder Wasserentnahme das Mischventil in die Kaltwasserposition zurückgeführt werden soll. Diese Einrichtung ist jedoch relativ kompliziert und aufwendig.

Der Erfindung liegt die Aufgabe zugrunde, das im Oberbegriff des Anspruchs 1 angegebene Mischventil mit einfachen und kostengünstigen Maßnahmen so auszubilden, daß ein energiesparender Betrieb ermöglicht wird.

Diese Aufgabe wird erfindungsgemäß mit den Merkmalen des Anspruchs 1 gelöst.
Weitere Ausgestaltungen der Erfindung sind in den Ansprüchen 2 bis 8 angegeben.

Die mit der Erfindung erzielbaren Vorteile bestehen insbesondere darin, daß die vorgeschlagenen Maßnahmen relativ einfach und kostengünstig bei Einhebelmischventilen mit scheiben-, kugel- oder kolbenförmigen Ventilgliedern verwirklicht werden können.
In weiterer Ausgestaltung der Erfindung kann als überwindbarer Anschlag zweckmäßig eine federgestrammte Kugelausbildung vorgesehen werden, wobei die Kugel mit einer Rasteinsenkung als Anschlag zusammenwirkt und die Feder so dimensioniert ist, daß durch eine erhöhte Krafteinlenkung in den Handhebel der Anschlag überwunden werden kann. Alternativ kann auch im Handhebelbereich eine Wippe angeordnet werden, die mit einer am Armaturenkörper ausgebildeten Stufe als Anschlag zusammenwirkt. Zweckmäßig weist hierbei die Wippe eine Anschlagnase auf, die zusammen mit der am Armaturenkörper ausgebildeten Stufe einen formschlüssigen Anschlag bildet, der durch Eindrücken einer an der Wippe ausgebildeten Taste lösbar ist.

Nach einer weiteren Ausgestaltung der Erfindung kann die Durchtrittsöffnung für Warmwasser zweckmäßig soweit zurückgesetzt werden, daß nach einer Aufbewegung des Handhebels von 1/5 bis 1/2 die Erzeugung von Mischwasser einsetzt.
In weiterer Ausgestaltung kann zweckmäßig die Durchtrittsöffnung für Kaltwasser im Querschnitt gestuft ausgebildet werden, derart, daß die Bogenlänge nach dem Erreichen des überwindbaren Anschlags auf etwa 1/2 bis 1/3 stufenartig verringert wird.
Bei scheibenförmigen Ventilelementen können vorteilhaft die Durchtrittsöffnungen ringabschnittförmig in dem Steuerelement angeordnet werden, die mit einer ringabschnittförmigen öffnung der Mischwasserabführung zusammenwirken, derart, daß im Kaltwasseröffnungsbereich über den gesamten Drehwinkel zur Einstellung des Mischungsverhältnisses eine etwa gleichbleibende Durchflußmenge pro Zeiteinheit abgegeben wird.

Ausführungsbeispiele der Erfindung sind in der Zeichnung dargestellt und werden im folgenden näher beschrieben. Es zeigt
- Figur: 1 ein zum Teil dargestelltes Einhebelmischventil im Längsschnitt;
- Figur 1a: das in Figur 1 gezeigte Einhebelmischventil in der Schnittebene I;
- Figur 2: ein in Figur 1 gezeigtes Steuerelement in Drunteransicht;
- Figur 3: ein in Figur 1 gezeigtes Ventilsitzelement in Draufsicht;
- Figur 4: die in Figur 1 gezeigte Position (Schließstellung) des Ventilsitzelements zum Steuerelement in Draufsicht in vergrößerter Darstellung;
- Figur 5: das in Figur 4 gezeigte Ventilsitzelement mit dem Steuerelement im Kaltwasserbereich in der Anschlagposition
- Figur 6: das in Figur 4 gezeigte Ventilsitzelement mit dem Steuerelement in voll geöffneter Position, wobei sich die beiden Elemente in einer Drehstellung zueinander befinden, in der Kalt- und Warmwasser in einem Verhältnis von etwa 1 : 1 gemischt werden;
- Figur 7: ein anderes Ausführungsbeispiel eines zum Teil dargestellten Einhebelmischventil im Längsschnitt.
In den Figuren 8 bis 10 ist eine andere Ausbildung der Ventilelemente für ein Einhebelmischventil dargestellt, wobei in Figur 8 ein Steuerelement in Drunteransicht, Figur 9 ein Ventilsitzelement in Draufsicht und in Figur 10 die beiden Ventilelemente in Draufsicht angeordnet sind, wobei das Steuerelement sich in der Schließstellung befindet.

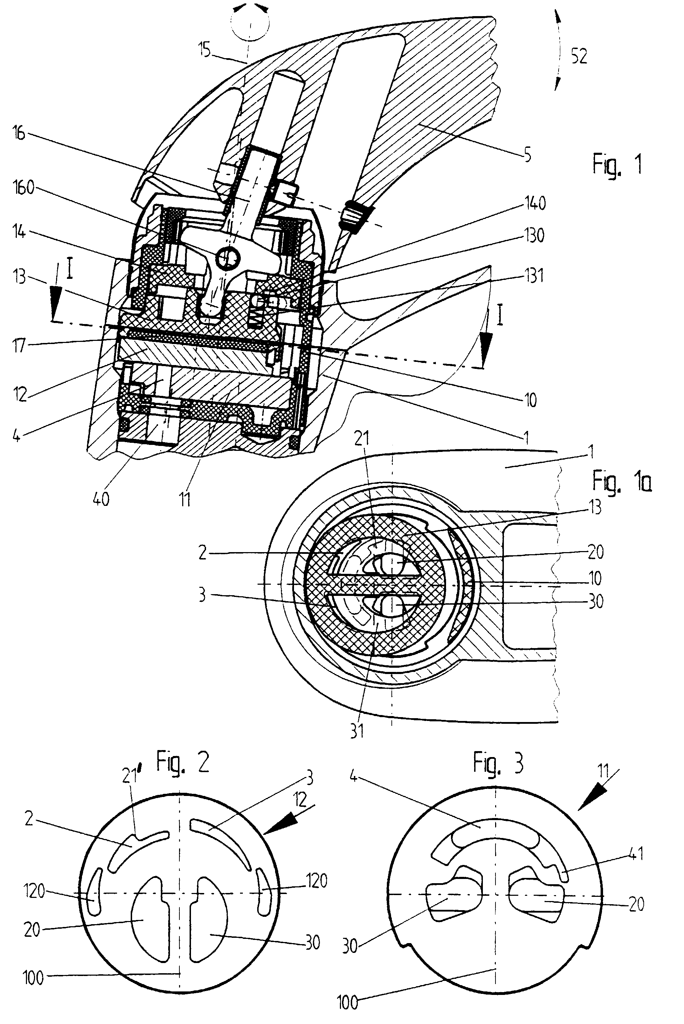

Der Einfachheit halber sind bei den Ausführungsbeispielen in der Zeichnung gleiche oder entsprechende Elemente mit jeweils gleichen Bezugszeichen versehen. Das in der Zeichnung in Figur 1 bis 6 zum Teil gezeigte Einhebelmischventil besteht aus einer Mischventilkartusche 10, die in einem Armaturenkörper 1 angeordnet ist, wobei aus der Mischventilkartusche 10 ein Stellhebel 16 herausgeführt ist, an dem ein Handhebel 5 befestigt ist. In der Mischventilkartusche ist auf einem Bodenbereich ein scheibenförmiges Ventilsitzelement 11 ortsfest angeordnet, auf dem ein ebenfalls als Scheibe ausgebildetes Steuerelement 12 angelagert ist, wobei das Steuerelement 12 mit dem Handhebel 5 über den Stellhebel 16 in einem ersten Freiheitsgrad um eine Drehachse 15 zur Einstellung des Mischungsverhältnisses von Kalt- und Warmwasser drehbar und in einem zweiten Freiheitsgrad, entsprechend dem Pfeil 52, zur Einstellung der Gesamtdurchflußmenge auf- oder abbewegbar ist. Bei der Auf- oder Abbewegung des Handhebels 5 wird der Stellhebel 16 um eine horizontale Achse 160 verschwenkt, so daß das Steuerelement 12 radial zum Ventilsitzelement 11 verschoben wird.

Das Steuerelement 12 ist von einem haubenförmigen Mitnehmer 13 unter Zwischenlage einer Dichtung 17 formschlüssig und die Durchbrüche nach außen abdichtend gehalten, wobei der Mitnehmer 13 an einem Drehlager 14 in der Mischventilkartusche 10 axial aufgenommen ist. Der Stellhebel 16 faßt hierbei mit einer walzenförmigen Spitze in eine rinnenförmige Ausnehmung des Mitnehmers 13, so daß sowohl bei einer Drehbewegung als auch einer Auf- oder Abbewegung des Handhebels 5 eine formschlüssige Verbindung zwischen Stellhebel 16 und Mitnehmer 13 besteht.

In dem Ventilsitzelement 11 ist auf der einen Seite einer Symmetrieachse 100 ein Zuflußkanal 30 für Warmwasser und auf der anderen Seite ein Zuflußkanal 20 für Kaltwasser ausgebildet, während konzentrisch zum Mittelpunkt eine ringabschnittförmige öffnung 4 für Mischwasser vorgesehen ist, wie es insbesondere aus Figur 3 zu entnehmen ist.
In dem in Figur 2 gezeigten Steuerelement sind der Zuflußkanal 30 für warmes Wasser sowie der Zuflußkanal 20 für kaltes Wasser als halbkreisförmige Durchbrüche ausgebildet, die in jeder vorgesehenen Dreh- oder Radialstellung mit dem jeweiligen Zuflußkanal 30,20 des Ventilsitzelements 11 in Verbindung stehen. Im oberen Bereich des Steuerelements 12 ist rechts von der Symmetrieachse 100 ein als Kreisringabschnitt ausgebildete Durchtrittsöffnung 3 für Warmwasser und auf der linken Seite eine als Kreisringabschnitt ausgebildete Durchtrittsöffnung 2 für Kaltwasser vorgesehen. Außerdem ist links und rechts am äußeren Randbereich jeweils eine Schmiermittelkammer 120 ausgebildet, die als Schmiermittelreservoir für die aufeinander gleitenden Ventilelemente dienen.
Die Durchtrittsöffnungen 2,3 und die Öffnung 4 sowie die Kanäle 20,30 sind jeweils als Durchbruch durch das Ventilsitzelement 11 und das Steuerelement 12 ausgeführt, wobei der Kanal 20 mit der Durchtrittsöffnung 2 und der Kanal 30 mit der Durchtrittsöffnung 3 über in dem Mitnehmer 13 ausgebildeten separaten Kammern 21,31 verbunden sind.
Die beiden als Kreisringabschnitte ausgebildeten Durchtrittsöffnungen 2,3 sind konzentrisch zur Mittelachse des Steuerelements 12 angeordnet, wobei der radiale Abstand zur Mittelachse gestuft ausgebildet ist, derart, daß die Durchtrittsöffnung 2 etwa um die Hälfte seiner Breite näher an die Mittelachse herangerückt ist. Außerdem ist die Durchtrittsöffnung 2, von der Symmetrieachse 100 ausgehend, mit einem Übergang 21' über einen Bogenbereich von einem Drittel auf die Hälfte der Breite reduziert, wie es insbesondere aus Figur 2 der Zeichnung zu entnehmen ist.

In dem Mitnehmer 13 ist an der Stirnseite eine Kugel 130 in einer Bohrung gelagert und axial gegen die Stirnseite des Drehlagers 14 gestrammt. In der gegenüberliegenden Seite des Drehlagers 14 ist eine Rasteinsenkung 140 vorgesehen, die so plaziert ist, daß eine mit dem Handhebel 5 überwindbare Verrastung erfolgt, wenn das Steuerelement 12 die öffnung 4 mit der Durchtrittsöffnung 2 etwa zur Hälfte überdeckt, d.h. die Durchtrittsöffnung 3 befindet sich noch in Absperrposition. Erst durch eine erhöhte Krafteinlenkung in den Handhebel 5 kann die Verrastung überwunden werden, so daß danach beide Durchtrittsöffnungen 2,3 mit der Öffnung 4 in Verbindung gebracht werden können und so wahlweise mit einer entsprechenden Drehstellung des Steuerelements 12 temperiertes Mischwasser erzeugt werden kann.

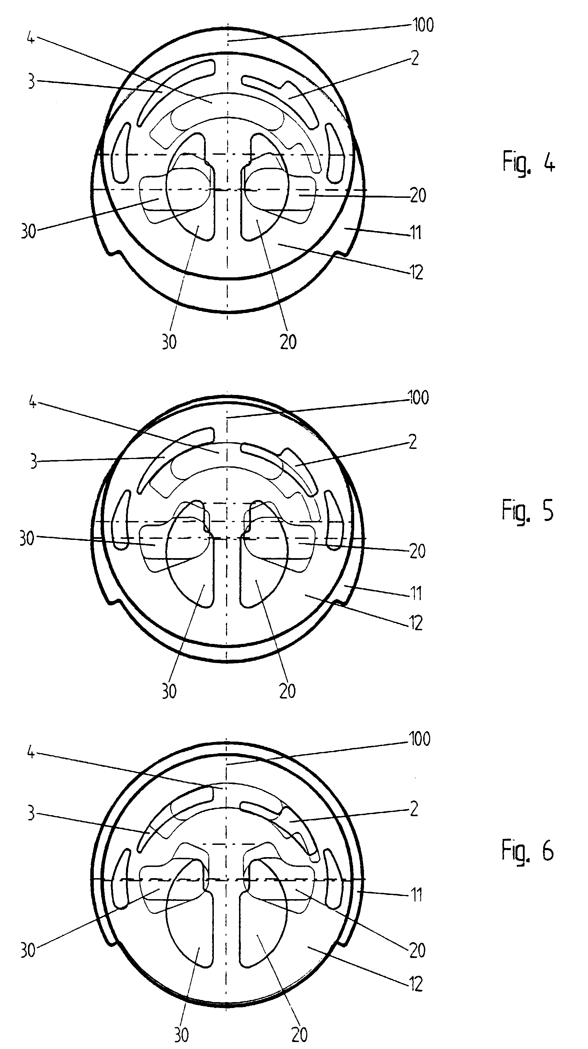

In den Figuren 4 bis 6 der Zeichnung sind verschiedene Stellungen der beiden Ventilelemente zueinander gezeigt.

In Figur 4 steht das Steuerelement 12 in Absperrposition zu dem Ventilsitzelement 11.
In Figur 5 ist das Steuerelement 12 in Richtung auf den Mittelpunkt des Ventilsitzelements 11 verschoben worden und befindet sich nun in der Anschlagposition, d.h. die Kugel 130 befindet sich in der Rasteinsenkung 140. In dieser Position kann das Kaltwasser über den Kanal 20 durch die Durchtrittsöffnung 2 in die Öffnung 4 des Ventilsitzelements 11 dem Auslauf im Armaturenkörper 1 zugeführt werden, während die Durchtrittsöffnung 3 für Warmwasser noch abgesperrt ist. Durch eine Aufbewegung des Handhebels 5 kann mit dem Steuerelement 12 von der in Figur 4 gezeigten Absperrposition bis zu der in Figur 5 gezeigten Position lediglich zunehmend Kaltwasser abgegeben bzw. gezapft werden. Bei einer Drehung des Handhebels 5 um die Drehachse 15 ändert sich in diesem Bereich die Kaltwasserausflußmenge nicht, da an der kreisringabschnittförmigen Öffnung 4 rechts von der Symmetrieachse 10 im Endbereich eine sprungartig verengte Verlängerung 41 ausgebildet ist, so daß über den gesamten Drehbereich der Durchtrittsquerschnitt der Durchtrittsöffnung 2 zur Öffnung 4 unverändert bleibt.

Wird nun durch erhöhte Krafteinlenkung in den Handhebel 5 die Verrastung der Kugel 130 in der Rasteinsenkung 140 überwunden, so gelangt nunmehr sowohl die Durchtrittsöffnung trittsöffnung 3 für Warmwasser als auch die 2 für Kaltwasser zunehmend in Überdeckung mit der Öffnung 4, so daß hiernach temperiertes Mischwasser erzeugt wird, wobei durch weitere Aufbewegung des Handhebels 5 das Steuerelement 12 in die in Figur 6 gezeigte Position bringbar ist. In dieser Position ist das Mischventil voll geöffnet, wobei aus etwa gleich starken Kalt- und Warmwasserströmen ein entsprechend temperiertes mittleres Mischwasser erzeugt wird. Durch eine Drehung des Handhebels 5 um die Mittelachse 15 kann nach der Überwindung des Anschlags das Mischungsverhältnis von Kalt- und Warmwasser bzw. die Temperatur des austretenden Mischwassers eingestellt werden.

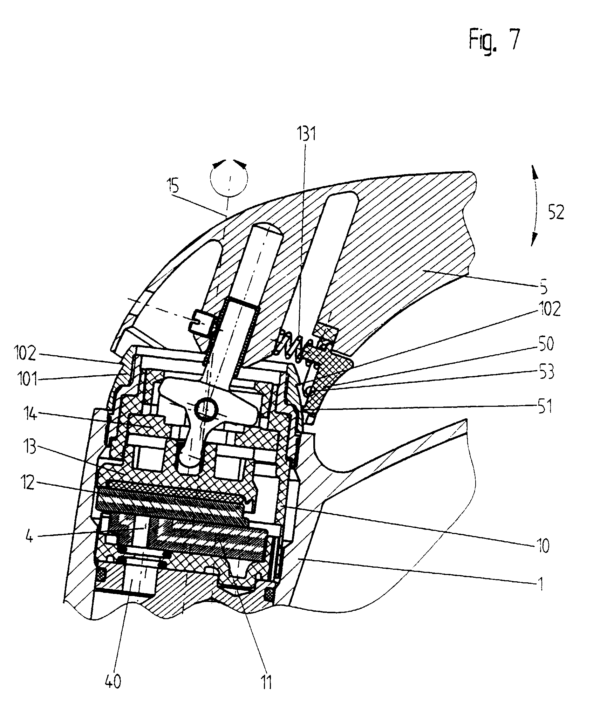

Das in Figur 7 der Zeichnung dargestellte Ausführungsbeispiel unterscheidet sich zu dem in Figur 1 dargestellten Ausführungsbeispiel lediglich durch eine andere Ausbildung des überwindbaren Anschlags. Anstatt der mit der Feder 131 gedrückten Kugel 130 ist bei dieser Ausbildung im schürzenförmig ausgebildeten Bereich des Handhebels 5 eine Wippe 50 angeordnet, die um eine Mittelachse 53 verschwenkbar ist. Die Wippe 50 weist dabei im unteren Endbereich eine Anschlagnase 51 auf, die mit einer im Außenbereich kugelzonenförmig ausgebildeten Kappe 101 zusammenwirkt. Die Kappe 101 weist dabei im Mantelbereich eine umlaufende Stufe 102 auf, an der bei einer Aufbewegung des Handhebels 5 die Anschlagnase 51 zur Anlage gelangt und dann eine weitere Aufbewegung verhindert. Erst wenn vom Benutzer der obere Bereich der Wippe entgegen der Kraft der Feder 131 mit der Hand eingedrückt wird, wird die Stufe 102 von der Anschlagnase 51 freigegeben, und der Handhebel 5 kann weiter aufbewegt werden bis zur maximalen Öffnung der Mischventilkartusche 10. Die Stufe 102 ist dabei so plaziert, daß bei Anlage der Anschlagnase 51 lediglich die Durchtrittsöffnung 2 für Kaltwasser geöffnet ist, während sich die Durchtrittsöffnung 3 für Warmwasser noch in der Absperrstellung befindet. Die Stufe 102 und die Anschlagnase 51 sind dabei als formschlüssige Anschlagmittel ausgebildet, d. h. der Handhebel 5 kann nicht durch erhöhte Krafteinlenkung über die Anschlagausbildung hinweg geführt werden. Bei dieser Ausbildung ist es erforderlich, daß vom Benutzer mit der Hand die Wippe 50 aus ihrer Anschlagposition ausgerückt wird.

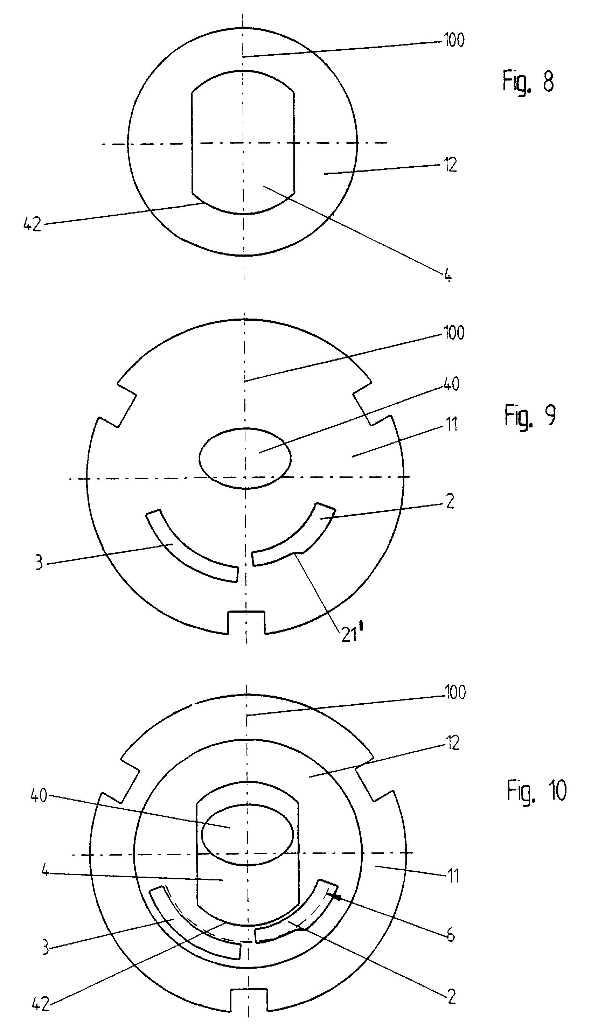

Bei einem weiteren Ausführungsbeispiel sind in Figur 8 bis 10 lediglich das Ventilsitzelement 11 und das Steuerelement 12 dargestellt, wobei die Wasserführungen in den Elementen zu den vorstehend beschriebenen anders ausgebildet sind. Das Ventilsitzelement 11 und das Steuerelement 12 kann hierbei in einer Mischventilkartusche 10, wie sie in Figur 1 und 7 dargestellt ist, angeordnet werden.
Die Durchtrittsöffnung 2 für Kaltwasser und die Durchtrittsöffnung 3 für Warmwasser sind hierbei gestuft, kreisabschnittförmig zu beiden Seiten der Symmetrieachse 100 angeordnet, während sich der Kanal 40 für Mischwasser im Zentrum des Ventilsitzelements 11 befindet, wie es insbesondere aus Figur 9 der Zeichnung zu entnehmen ist.
In dem Steuerelement 12 ist lediglich eine öffnung 4 als Überstromkanal ausgebildet, mit dem mit einer bogenförmigen Steuerkante 42 das Überströmen aus der Durchtrittsöffnung 2 und 3 einstellbar ist.
In Figur 10 ist das Steuerelement 12 auf dem Ventilsitzelement 11 in der Schließposition dargestellt. Die als langgestreckter Überströmkanal ausgebildete Öffnung 4 befindet sich parallel zur Symmetrieachse 100. Wird nun das Steuerelement 12 parallel zur Symmetrieachse 100 durch einen Handhebel abwärts bewegt, so gelangt zunächst die Durchtrittsöffnung 2 für Kaltwasser mit der Öffnung 4 in Verbindung, so daß Kaltwasser in den Kanal 40 für Mischwasser überströmen kann, da dieser in jeder Position des Steuerelements 12 mit der Öffnung 4 in Verbindung steht. Durch eine weitere Abwärtsbewegung des Steuerelements 12 wird somit zunehmend die Durchtrittsöffnung 2 geöffnet, bis die Steuerkante 42 sich in der Position der gestrichelt dargestellten Anschlaglinie 6 des überwindbaren Anschlags befindet. Bis zu dieser Position kann somit lediglich Kaltwasser gezapft werden.

Wird der überwindbare Anschlag durch eine verstärkte Krafteinlenkung in den Handhebel 5 überwunden oder die Wippe 50 von Hand gelöst, so gelangt bei einer weiteren Verschiebung die Öffnung 4 für Mischwasser auch zunehmend mit der Durchtrittsöffnung 3 für Warmwasser in Verbindung, so daß temperiertes Mischwasser erzeugt werden kann. Wird in diesem Bereich das Steuerelement 12 um die Drehachse gedreht, so kann in konventioneller Weise unterschiedlich temperiertes Mischwasser eingestellt werden. Die Durchtrittsöffnung 2 für Kaltwasser ist hierbei wiederum am Außenbereich mit etwa 1/2 der Bogenlänge von der Symmetrieachse 10 aus reduziert ausgebildet, wobei ein Übergang 21', etwa auf die Anschlaglinie 6 beginnend, vorgesehen ist.

Die vorstehend beschriebenen Ausführungsbeispiele sind für den Betrieb mit einem Kaltwasser- und einem Warmwasserversorgungsleitungsnetz ausgelegt. Selbstverständlich können die in den Ausführungsbeispielen gezeigten Mischventile auch für den Betrieb mit einem drucklosen Warmwasserüberlaufspeicher vorgesehen werden. Hierbei ist lediglich eine umgekehrte Wasserführung in der Mischventilkartusche 10 erforderlich. In diesem Falle wird das vom Wasserleitungsnetz zugeführte Kaltwasser über den Kanal für Mischwasser dem Ventilsitzelement 11 und dem Steuerelement 12 zugeführt. Über die Durchtrittsöffnungen 2 und 3 kann dann der zuströmende Kaltwasserstrom in zwei Teilströme aufgeteilt werden. Das durch die Durchtrittsöffnung 2 abgegebene Kaltwasser gelangt hierbei unmittelbar in eine Mischkammer oder einen Auslauf des Mischventils. Der Teilstrom, der über die Durchtrittsöffnung 3 abgeführt wird, gelangt über eine Zuflußleitung zu einem in der Zeichnung nicht dargestellten drucklosen Warmwasserüberlaufspeicher, von dem synchron die gleiche Menge erhitztes Wasser über eine Rückführleitung der Mischkammer in dem Mischventil wieder zugeführt wird, so daß in Abhängigkeit von der Drehstellung des Handhebels temperiertes Mischwasser erzeugbar ist. Auch in diesem Falle bewirkt die gestufte Anordnung der Durchtrittsöffnungen 2 und 3, daß zunächst bei der Aufbewegung des Handhebels bis zum Erreichen des überwindbaren Anschlags nur Kaltwasser von dem Mischventil abgegeben werden kann.

## Patentansprüche

1. Einhebelmischventil mit
- einem feststehenden Ventilsitzelement (11), in dem wenigstens Durchflußöffnungen (20,30,4;2,3) für Warm- und/oder Kaltwasser ausgebildet sind,
- einem an dem Ventilsitzelement (11) anliegenden, mit einem Handhebel (5) in zwei Freiheitsgraden bewegbaren Steuerelement (12), wobei in dem einen Freiheitsgrad durch eine Auf- oder Abbewegung des Handhebels (5) mit dem Steuerelement (12) die Gesamtdurchflußmenge pro Zeiteinheit, in dem anderen Freiheitsgrad durch eine Drehbewegung um eine Drehachse das Mischungsverhältnis von Kalt- und Warmwasser einstellbar ist, und
- einem überwindbaren Anschlag (130,140;50,101) dadurch gekennzeichnet, daß zwei radial gestufte Durchtrittsöffnungen (2,3) zur Mengenregulierung vorhanden sind, die entweder durch die im Ventilsitzelement angeordneten Durchflußöffnungen für Warm- und/oder Kaltwasser gebildet werden oder im Steuerelement (12) angeordnet sind, so daß, von der Absperrstellung ausgehend, bei einer Aufbewegung des Handhebels (5) zunächst allein die Durchtrittsöffnung (2) für Kaltwasser freigegeben wird, und daß, bevor auch die Durchtrittsöffnung (3) für Warmwasser zunehmend freigegeben wird, der Anschlag (130,140;50,101) überwunden werden muß.

2. Einhebelmischventil nach Anspruch 1 dadurch gekennzeichnet, daß als überwindbarer Anschlag eine in einem Mitnehmer (13) des Steuerelements (12) angeordnete federgestrammte Kugel (130) vorgesehen ist, die mit einer Rasteinsenkung (140) in einem Drehlager (14) in einer Mischventilkartusche (10) zusammenwirkt.

3. Einhebelmischventil nach Anspruch 1 dadurch gekennzeichnet, daß als überwindbarer Anschlag eine Wippe (50) vorgesehen ist, die vom Benutzer lösbar ist.

4. Einhebelmischventil nach Anspruch 3 dadurch gekennzeichnet, daß die Wippe (50) im Bereich einer Schürze des Handhebels (5) angeordnet und von einer Feder (131) in Raststellung gedrückt ist, wobei am Armaturenkörper (1) eine im Außenbereich kugelzonenförmige Kappe (101) mit einer umlaufenden Stufe (102) angeordnet ist, die von der Schürze des Handhebels (5) umfaßt ist, und die Wippe (50) mit einer Anschlagnase (51) mit der Stufe (102) zusammenwirkt.

5. Einhebelmischventil nach einem der Ansprüche 1 bis 4 dadurch gekennzeichnet, daß die Durchtrittsöffnung (3) für das Warmwasser gegenüber der Durchtrittsöffnung (2) für das Kaltwasser so weit radial zurückgesetzt ist, daß erst nach einer Aufbewegung von 1/5 bis 1/2 der maximalen Aufbewegung des Handhebels (5) der Durchfluß in der Durchtrittsöffnung (3) für Warmwasser zunehmend freigegeben wird.

6. Einhebelmischventil nach einem der Ansprüche 1 bis 5 dadurch gekennzeichnet, daß die im Steuerelement (12) angeordnete Durchtrittsöffnung (2) für Kaltwasser mit einer ringförmigen Öffnung (4) in dem Ventilsitzelement (11) in Verbindung bringbar ist, wobei der Bogenbereich der Öffnung (4) so dimensioniert ist, daß während des gesamten Drehbereichs des Steuerelements (12) im Kaltwasseröffnungsbereich die Durchflußmenge pro Zeiteinheit etwa gleich bleibt.

7. Einhebelmischventil nach Anspruch 6 dadurch gekennzeichnet, daß die Öffnung (4) im Seitenbereich zur Durchtrittsöffnung (2) für Kaltwasser eine etwa auf die halbe Breite reduzierte bogenförmige Verlängerung (41) aufweist, so daß eine etwa gleichbleibende Durchflußmenge im Kaltwasseröffnungsbereich bei einer Drehbewegung des Steuerelements (12) gegeben ist.

8. Einhebelmischventil nach einem der Ansprüche 6 oder 7 dadurch gekennzeichnet, daß die Durchtrittsöffnung (2) für Kaltwasser im Querschnitt ringabschnittförmig ausgebildet ist, wobei der Bogenbereich bezüglich der korrespondierenden öffnung (4) vom überwindbaren Anschlag an mit einem Übergang (21') um ein 1/2 bis 1/3 der Bogenlänge von der Symmetrie achse (100) aus verringert ist.

## Claims

1. Single-lever mixer tap comprising
- a stationary valve seat element (11), in which there are formed at least through-flow openings (20, 30, 4; 2,3) for hot and/or cold water,
- a control element (12) that rests against the valve seat element (11) and is movable in two degrees of freedom by a hand lever (5), the total quantity of flow per unit time being adjustable in one degree of freedom by the control element (12) by moving the hand lever (5) up or down, and the mixing ratio of cold and hot water being adjustable in the other degree of freedom by a rotational movement about an axis of rotation, and
- a stop (130, 140; 50, 101) that can be overcome,
characterised in that two radially staggered openings (2,3) are present for regulating the quantity, which are either formed by the through-flow openings for hot and/or cold water that are arranged in the valve seat element, or are arranged in the control element (12), so that, starting from the closed position, when the hand lever (5) is moved upwards at first only the opening (2) for cold water is released and the stop (130, 140; 50, 101) must be overcome before the opening (3) for hot water is increasingly released also.

2. Single-lever mixer tap according to claim 1, characterised in that there is provided as stop that can be overcome a ball (130) that is arranged spring-loaded in a carrier (13) of the control element (12), which ball (130) co-operates with a catching recess (140) in a pivot bearing (14) in a mixer tap cartridge (10).

3. Single-lever mixer tap according to claim 1, characterised in that there is provided as stop that can be overcome a rocking device (50) that can be released by the user.

4. Single-lever mixer tap according to claim 3, characterised in that the rocking device (50) is arranged in the region of an apron of the hand lever (5) and is pressed into the catching position by a spring (131), there being arranged on the body (1) of the fitting a cap (101) that is, in the outer region, in the shape of a spherical segment and has a step (102) around the circumference, which cap is encompassed by the apron of the hand lever (5), and the rocking device (50) co-operates with the step (102) by a stop nose (51).

5. Single-lever mixer tap according to any one of claims 1 to 4, characterised in that the opening (3) for hot water is set back radially in relation to the opening (2) for cold water far enough for the flow through the opening (3) for hot water to be released increasingly only after the hand lever (5) has been moved upward by from 1/5 to 1/2 of the maximum upward movement thereof.

6. Single-lever mixer tap according to any one of claims 1 to 5, characterised in that the opening (2) for cold water that is arranged in the control element (12) can be brought into communication with an annular opening (4) in the valve seat element (11), the dimensions of the arcuate region of the opening (4) being such that the quantity of flow per unit time in the cold water opening region remains approximately the same during the full range of rotation of the control element (12).

7. Single-lever mixer tap according to claim 6, characterised in that the opening (4), in the side region towards the opening (2) for cold water, has an arcuate extension (41) that is reduced to approximately half width, with the result that the quantity of flow in the cold water opening region remains approximately the same during a rotational movement of the control element (12).

8. Single-lever mixer tap according to either claim 6 or claim 7, characterised in that the cross-section of the opening (2) for cold water is in the shape of a segment of a circle, the arcuate region being narrowed, with reference to the corresponding opening (4), starting from the stop that can be overcome, with a transition (21'), over from 1/2 to 1/3 of the length of the arc starting from the axis of symmetry (100).

## Revendications

1. Mitigeur monocommande avec :
- un élément fixe de siège de vanne (11), dans lequel sont constitués au moins des orifices d'écoulement (20, 30, 4; 2, 3) pour l'eau chaude et pour l'eau froide,
- un élément de commande (12) avec un levier à main (5), élément que l'on peut déplacer avec deux degrés de liberté, la quantité totale d'écoulement pouvant être réglée dans le cadre de l'un des degrés de liberté en faisant monter ou descendre le levier à main (5) avec l'élément de commande (12), le rapport entre l'eau froide et l'eau chaude du mélange pouvant être réglé dans le cadre de l'autre degré de liberté par un mouvement de rotation autour d'un axe de rotation, et
- une butée, qui peut être surmontée, (130, 140; 50, 101),
caractérisé en ce que
deux orifices de passage (2, 3), présentant radialement des gradins, sont prévus pour le réglage du débit, orifices qui sont soit formés par les orifices d'écoulement disposés dans l'élément de siège de vanne pour l'eau chaude et/ou l'eau froide soient disposés dans l'élément de commande (12), de telle sorte que, en partant de la position fermée, on libère tout d'abord seulement l'ouverture de passage (2) pour l'eau froide en faisant monter le levier à main (5), et qu'avant de libérer aussi l'orifice de passage (3) pour l'eau chaude de façon croissante, il faille surmonter la butée (130, 140; 50, 101).

2. Mitigeur monocommande, selon la revendication 1,
caractérisé en ce que
l'on prévoit comme butée pouvant être surmontée, une bille raidie par un ressort (130), disposée dans un organe d'entraînement (13) de l'élément de commande (12), bille (130) qui coopère avec une encoche d'encliquetage (140) dans un coussinet de pivotement (14) prévu dans une cartouche de mitigeur (10).

3. Mitigeur monocommande, selon la revendication 1,
caractérisé en ce que
l'on prévoit comme butée pouvant être surmontée, une bascule (50) qui peut être libérée par l'utilisateur.

4. Mitigeur monocommande, selon la revendication 3,
caractérisé en ce que
la bascule (50) est disposée dans la zone d'une jupe du levier à main (5) et est poussée par un ressort (131) dans la position d'encliquetage, un chapeau (101) en forme de cône dans la zone extérieure étant muni d'un gradin (102) qui en fait tout le tour et qui est entouré par la jupe du levier à main (5), et la bascule (50) coopérant par un nez de butée (51) avec le gradin (102).

5. Mitigeur monocommande, selon l'une des revendications 1 à 4,
caractérisé en ce que
l'orifice de passage (3) pour l'eau chaude est reculé radialement par rapport à l'orifice de passage (2) pour l'eau froide jusqu'à ce que l'écoulement dans l'orifice de passage (3) pour l'eau chaude soit libéré de façon croissante seulement après un mouvement de montée du levier à main (5) de l'ordre d'un cinquième à la moitié du mouvement de montée maximal.

6. Mitigeur monocommande, selon l'une des revendications 1 à 5,
caractérisé en ce que
l'orifice de passage (2) pour l'eau froide qui est disposé dans l'élément de commande (12), pour l'eau froide peut être mis en liaison avec un orifice de forme annulaire (4) dans l'élément de siège de vanne (11), la zone en forme d'arc de l'orifice (4) étant dimensionnée de telle sorte que, dans toute la zone de rotation de l'élément de commande (12) dans la zone d'ouverture de l'eau froide, la quantité de liquide qui s'écoule par unité de temps demeure à peu près la même.

7. Mitigeur monocommande, selon la revendication 6,
caractérisé en ce que
l'orifice (4) dans la zone latérale qui va à l'orifice de passage (2) pour l'eau froide, présente un prolongement (41) en forme d'arc, qui est réduit à peu près à la moitié de la largeur, de telle sorte que l'on a une quantité d'écoulement de liquide qui demeure à peu près la même dans la zone d'ouverture de l'eau froide, lorsqu'on fait tourner l'élément de commande (12).

8. Mitigeur monocommande, selon l'une des revendications 6 ou 7,
caractérisé en ce que
l'orifice de passage (2) pour l'eau froide est constitué en section transversale, sous la forme d'une section annulaire, la zone en forme d'arc, en ce qui concerne l'orifice correspondant (4) étant réduite par la butée surmontable avec un passage (21'), de la moitié au tiers de la longueur de l'arc à partir de l'axe de symétrie (100).
